# EUROPEAN PATENT SPECIFICATION

(11) **EP 2 048 027 B1**
(45) Date of publication and mention of the grant of the patent: **24.11.2010**
(21) Application number: 08165695.1
(22) Date of filing: 02.10.2008
(51) Int. Cl.: B60P 7/08

(54) **Apparatus for extending the arm of a lever**
Vorrichtung zum Erweitern eines Hebelarms
Appareil pour allonger le bras d'un levier

(30) Priority: 10.10.2007 IT PD20070327
(43) Date of publication of application: 15.04.2009
(73) Proprietor: Niklaus, Alois, 39100 Bolzano (IT)
(72) Inventor: Niklaus, Alois, 39100 Bolzano (IT)
(74) Representative: Modiano, Micaela Nadia

(56) References cited:
- CA-A1- 2 173 813
- US-A- 3 707 885
- US-A- 4 218 046
- US-A- 4 532 836
- US-A- 5 524 505
- US-A1- 2007 217 884

## Description

The present invention relates to an apparatus for extending the arm of a lever, particularly for extending the arm of a lever of strap tensioning devices.

An apparatus for extending the lever arm is currently known which can be used in particular to tighten the straps for retaining the load on bodies of trucks and the like and has an elongated main body that can be gripped by the user at one end and has, at the other end, an element for connection to a lever whose arm is to be extended.

The connecting element has a box-like structure that is open at one end to accommodate at least part of the lever.

Once the lever has been inserted in such box-like structure, the user, by acting on the main body, actuates the lever, having the benefit of an extended arm which requires him to perform a smaller actuation effort than required for direct actuation of the lever.

Although the use of this apparatus is particularly advantageous, especially when used to operate strap tensioning devices, it has the drawback that the tightening of strap tensioning devices is facilitated so much that it allows to reach the strength limits of the straps and/or of the strap tensioner, causing them to break.

The need is therefore felt for an apparatus for extending the lever arm that allows to limit the tightening force of strap tensioning devices and the like.

US-A-5 524 505 discloses an extension handle for increasing leverage during tightening or releasing of a conventional chain binder into or out of a tightened position, the chain binder including an operating lever connected to a pair of tensile load carrying toggle members pivotally connected at spaced locations along the lever, whereby movement of the operating lever between the closed and open positions thereof causing buckling or unbuckling of the toggle members. The extension handle includes a binder engagement member (for releasable engagement with the binder operating lever) pivotally connected to a gripping member at a pivotal connection. The binder engagement member and the gripping member are resiliently urged into a linear relation by a helical spring positioned around the pivotal connection which contacts the engagement member and gripping member. The extension handle remains rigid as force is applied to the chain binder in a first direction but resiliently bends in an opposite second direction as the chain binder snaps into or out of a locked position.

The aim of the present invention is to provide an apparatus for extending the arm of a lever that meets this requirement, allowing to limit the tightening force of strap tensioning devices and the like.

Within this aim, an object of the invention is to provide an apparatus that can be preset to limit the force that can be transmitted thereby to a predefined limit.

Another object of the invention is to provide an apparatus that allows effective tightening of the straps for retaining the load, which is for example arranged on the body of a truck, so as to allow safe transport thereof.

Another object of the invention is to provide an apparatus that is structurally simple and easy to use and can be manufactured with low costs.

In accordance with the invention, there is provided an apparatus for extending the arm of a lever, particularly for extending the arm of a lever of strap tensioning devices, as defined in the appended claims.

Further characteristics and advantages of the invention will become better apparent from the following detailed description of a preferred but not exclusive embodiment of the apparatus according to the invention, illustrated by way of non-limiting example in the accompanying drawings, wherein:

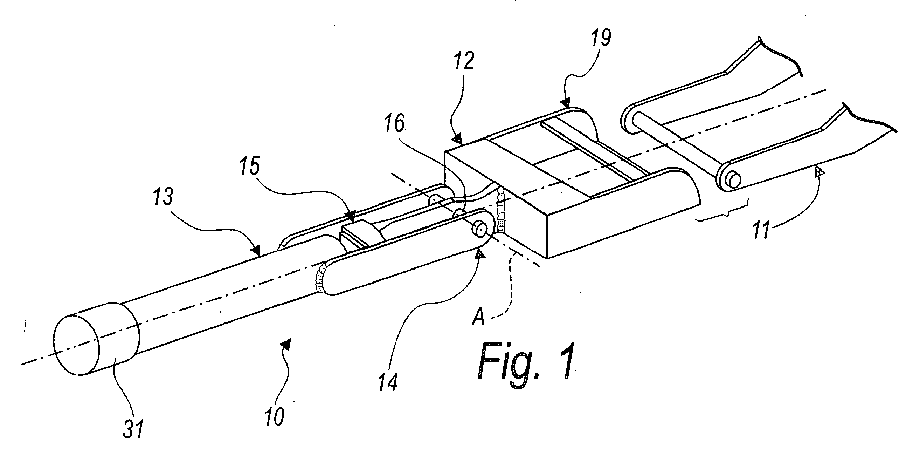

Figure 1 is a perspective view of an apparatus according to the invention;

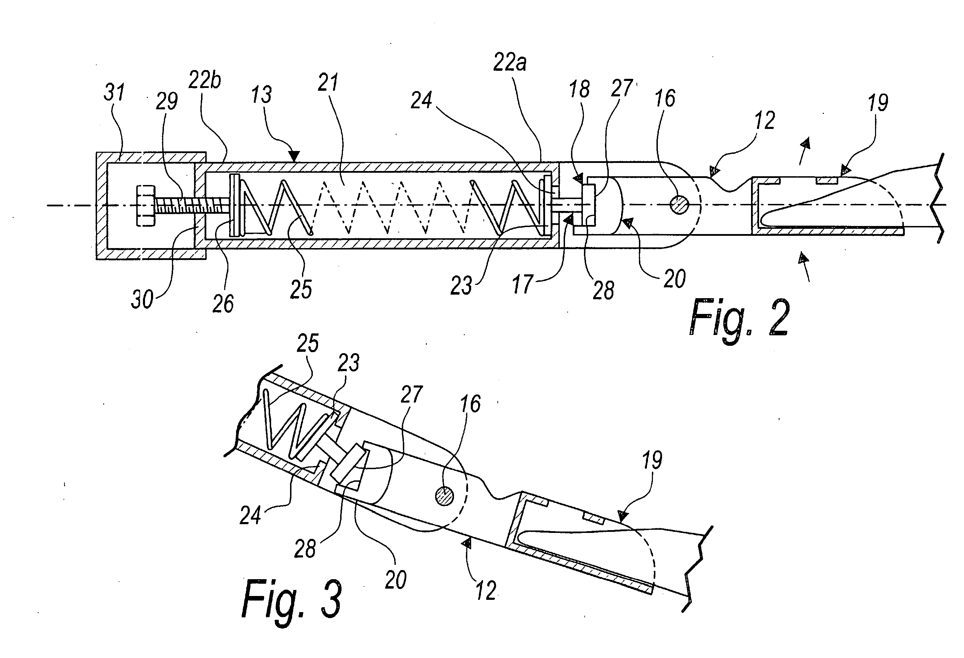

Figure 2 is a sectional view of an apparatus according to the invention, taken along a longitudinal plane;
Figure 3 is an enlarged-scale sectional view of a detail of the apparatus according to the invention, in the operating configuration.

With reference to the figures, the reference numeral 10 generally designates an apparatus for extending the arm of a lever 11, particularly for extending the arm of a lever 11 of strap tensioning devices, which has the particularity of comprising
- an element 12 for connection to the lever 11, which can be associated therewith jointly and reversibly,
- a main body 13, which is associated with the connecting element 12 by way of means 14 for mutual inclination and can be gripped by the user to operate the lever 11 by way of the connecting element 12, and
- means 15 for contrasting the mutual inclination of the main body 13 with respect to the connecting element 12, which can yield to a predefined force that contrasts the rotation of the lever 11, applied thereby to the connecting element 12.

Advantageously, the inclination means 14 comprise a pivot 16 for coupling the connecting element 12 to the main body 13, for their mutual inclination by rotation about a rotation axis A that is defined by the longitudinal axis of the pivot 16.

The contrast means 15 preferably comprise
- a piston 17 that is associated with the main body 13, by way of mutual sliding means, and is provided with a head 18 for pushing against the connecting element 12,
- elastic means for pushing the piston 17 along the main body 13 against the connecting element 12.

Further, advantageously, the connecting element 12 is elongated, is associated with the pivot 16 in an intermediate portion thereof, has at one end a region 19 that is equipped so as to lock itself to the lever 11, and has, at the other end, an element 20 for abutment against the head 18.

Conveniently, the main body 13 is box-like, and a cylinder 21 for accommodating such elastic means is formed inside it.

The piston 17 conveniently has, at its opposite end with respect to the head 18, a plate 23, which is inserted slidingly in a first end 22a of the cylinder 21; at the same time, the head 18 cantilevers out from the first end 22a.

The main body 13 advantageously has means for contrasting the extraction of the plate 23 from the first end 22a, which conveniently comprise a stroke limiting shoulder 24 for the plate 23.

Preferably, such elastic means comprise a helical spring 25, which is accommodated within the cylinder 21 and is precompressed between the plate 23 and an end plate 26 that closes a second end 22b of the cylinder 21.

The head 18 conveniently has a first flat portion 27 for abutment against a corresponding second flat portion 28 formed on the abutment element 20.

Advantageously, the piston 17 and the connecting element 12, when they are associated with the first flat portion 27 that adheres to the second flat portion 28, have the flat portions 27 and 28 arranged substantially transversely with respect to the longitudinal extension of the cylinder 21.

Further, the apparatus 10 preferably comprises means for adjusting the preloading of the spring 25, which conveniently comprise a screw 29 for pushing against the end plate 26 which is screwed onto the bottom 30 of the main body 13, at the first end 22a.

Preferably, there is also a plug 31 for covering the head of the screw 29, which is associated with the bottom 30.

Use of the apparatus 10 according to the invention is as follows.

The user interlocks the apparatus 10 with the lever 11 at the equipped region 19, then grips the main body 13 and by acting thereon turns the lever 11 about its fulcrum.

The piston 17, pushed by the spring 25 against the connecting element 12, prevents its rotation with respect to the main body 13 gripped by the user, and so the lever 11 is turned thereby jointly with the main body 13.

When the force that contrasts the rotation of the lever 11 is equal to, or greater than, the predefined value preset by the preloading of the spring 25, the spring 25 yields, allowing the rotation of the connecting element 12 with respect to the main body 13.

In this manner, the reaching of the preset limit force for action on the lever 11 is indicated to the user.

In practice it has been shown that the invention achieves the proposed aim and objects, providing an apparatus for extending the arm of a lever that allows to limit the tightening force of strap tensioning devices and the like, such limit force being further presettable by way of the means for adjusting the preloading of the spring.

Further, an apparatus according to the invention, by providing an extended lever arm for strap tensioning devices, allows a more effective tightening of straps for retaining loads, arranged on bodies of trucks or the like, than the fastening that can be obtained by acting directly on the strap tensioning device, so as to ensure safe transport of the load.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus (10) for extending the arm of a lever, particularly for extending the arm of a lever (11) of strap tensioning devices, comprising
- an element (12) for connection to said lever (11), which can be associated therewith jointly and reversibly,
- a main body (13), which is associated with said connecting element (12) by way of means (14) for mutual inclination and can be gripped by the user to operate said lever (11) by way of said connecting element (12), said inclination means (14) comprising a pivot (16) for the connection of said connecting element (12) to said main body (13), for their mutual inclination by rotation about a rotation axis (A) formed by the longitudinal axis of said pivot .(16), said connecting element (12) being elongated, associated with said pivot (16) in an intermediate portion thereof and having at a first end a region (19) that is equipped to lock itself to said lever (11), and
- means (15) for contrasting the mutual inclination of said main body (13) with respect to said connecting element (12), which can yield to a predefined force that contrasts the rotation of said lever (11), applied thereby to said connecting element (12),
the apparatus being **characterized in that:**
said contrast means (15) comprise a piston (17), which is associated with said main body (13), by way of mutual sliding means, and is provided with a head (18) for pushing against said connecting element (12), and elastic means for pushing said piston (17) along said main body (13) against said connecting element (12), said connecting element (12) having at a second end, an element (20) for abutment against said head (18);
said main body (13) is box-like, a cylinder (21) for accommodating said elastic means being formed inside it, said piston (17) being inserted partially and slidingly in a first end (22a) of said cylinder (21), said main body (13) having means (15) for contrasting the extraction of said piston (17) from said first end (22a), said elastic means comprising a helical spring (25), which is accommodated in said cylinder (21) and is precompressed between said piston (17) and an end plate (26) that closes the second end (22b) of said cylinder (21); and
the apparatus further comprising means for adjusting the reloading of said spring (25).

2. The apparatus according to claim 1, **characterized in that** said head (18), which cantilevers out from said first end (22a), has a first flat portion (27) for abutment against a corresponding second flat portion (28) formed on said abutment element (20), said piston (17) and said connecting element (12), associated with said first flat portion (27) that adheres to said second flat portion (28), having said first flat portion (27) and said second flat portion (28) arranged substantially transversely with respect to the longitudinal extension of said cylinder (21).

## Patentansprüche

1. Eine Vorrichtung (10) zum Erweitern eines Hebelarms, insbesondere zum Erweitern des Hebelarms (11) von Vorrichtungen zum Festziehen von Riemen, die Folgendes umfasst:
- ein Element (12) zur Verbindung mit dem Hebel (11), das damit gemeinsam und reversibel verbunden werden kann,
- einen Hauptkörper (13), der mit dem Verbindungselement (12) durch Mittel (14) zur gegenseitigen Neigung assoziiert ist und vom Benutzer zur Betätigung des Hebels (11) durch das Verbindungselement (12) ergriffen werden kann, wobei die Neigungsmittel (14) einen Drehzapfen (16) zur Verbindung des Verbindungselements (12) mit dem Hauptkörper (13) umfassen, zwecks ihrer gegenseitigen Neigung durch Drehung um eine Drehachse (A), die von der Längsachse des Drehzapfens (16) gebildet wird, wobei das Verbindungselement (12) verlängert ist, assoziiert ist mit dem Drehzapfen (16) in einem mittleren Abschnitt davon, und an einem ersten Ende einen Bereich (19) hat, der ausgerüstet ist, um sich an dem Hebel (11) zu verriegeln, und
- Mittel (15) zum Entgegenwirken gegenüber der gegenseitigen Neigung des Hauptkörpers (13) in Bezug zu dem Verbindungselement (12), die einer vordefinierten Kraft nachgeben können, welche der Drehung des Hebels (11) entgegenwirkt, die dabei auf das Verbindungselement (12) ausgeübt wird,
wobei die Vorrichtung **dadurch gekennzeichnet ist, dass**:
die Mittel (15) zum Entgegenwirken einen Kolben (17) umfassen, der durch Mittel zum gegenseitigen Gleiten mit dem Hauptkörper (13) assoziiert ist und mit einem Kopf (18) zum Drücken gegen das Verbindungselement (12) ausgestattet ist, und elastische Mittel zum Drucken des Kolbens (17) entlang dem Hauptkörper (13) gegen das Verbindungselement (12), wobei das Verbindungselement (12) an einem zweiten Ende ein Element (20) zum Anstoßen gegen den Kopf (18) hat;
der Hauptkörper (13) ist kastenartig, wobei ein Zylinder (21) zur Aufnahme der elastischen Mittel in ihm geformt ist, wobei der Kolben (17) partiell und gleitend in ein erstes Ende (22a) des Zylinders (21) eingeführt wird, wobei der Hauptkörper (13) Mittel (15) zum Entgegenwirken gegenüber der Extraktion des Kolbens (17) aus dem ersten Ende (22a) hat, wobei die elastischen Mittel eine Schraubenfeder (25) umfassen, welche in dem Zylinder (21) untergebracht ist und zwischen dem Kolben (17) und einer Endplatte (26) vorkomprimiert wird, die das zweite Ende (22b) des Zylinders (21) verschließt, und
wobei die Vorrichtung weiter Mittel zur Einstellung der Vorspannung der Feder (25) umfasst.

2. Die Vorrichtung gemäß Anspruch 1, **dadurch gekennzeichnet, dass** der Kopf (18), der freitragend aus dem ersten Ende (22a) herausragt, einen ersten flachen Abschnitt (27) zum Anstoßen an einen entsprechenden zweiten flachen Abschnitt (28) hat, der an dem Element (20) zum Anstoßen geformt ist, wobei der Kolben (17) und das Verbindungselement (12), assoziiert mit dem ersten flachen Abschnitt (27), der an dem zweiten flachen Abschnitt (28) haftet, den ersten flachen Abschnitt (27) und den zweiten flachen Abschnitt (28) hat, die im Wesentlichen quer zur Erstreckung des Zylinders (21) in Längsrichtung angeordnet sind.

## Revendications

1. Appareil (10) pour allonger le bras d'un levier, particulièrement pour allonger le bras d'un levier (11) de dispositifs de tension de sangles, comportant :
- un élément (12) pour la connexion audit levier (11), lequel peut être associé à celui-ci de manière conjointe et réversible,
- un corps principal (13), lequel est associé audit élément de connexion (12) par l'intermédiaire de moyens (14) pour une inclinaison mutuelle et peut être saisi par l'utilisateur pour actionner ledit levier (11) par l'intermédiaire dudit élément de connexion (12), lesdits moyens d'inclinaison (14) comportant un pivot (16) pour la connexion dudit élément de connexion (12) audit corps principal (13), pour leur inclinaison mutuelle par rotation autour d'un axe de rotation (A) formé par l'axe longitudinal dudit pivot (16), ledit élément de connexion (12) étant allongé, associe audit pivot (16) dans une partie intermédiaire de celui-ci et ayant à une première extrémité une région (19) qui est équipée pour s'auto-verrouiller audit levier (11), et
- des moyens (15) pour s'opposer à l'inclinaison mutuelle dudit corps principal (13) par rapport audit élément de connexion (12), lequel peut produire une force prédéfinie qui s'oppose à la rotation dudit levier (11), appliquée ainsi audit élément de connexion (12), l'appareil étant **caractérisé en ce que :**
lesdits moyens d'opposition (15) comportent un piston (17), lequel est associé audit corps principal (13), par l'intermédiaire de moyens de coulissement mutuel, et est muni d'une tête (18) pour pousser contre ledit élément de connexion (12), et des moyens élastiques pour pousser ledit piston (17) le long dudit corps principal (13) contre ledit élément de connexion (12), ledit élément de connexion (12) ayant à une seconde extrémité, té, un élément (20) pour venir en butée contre ladite tête (18),
ledit corps principal (13) est en forme de boîte, un cylindre (21) pour recevoir lesdits moyens élastiques étant formé à l'intérieur de celui-ci, ledit piston (17) étant inséré partiellement et par coulissement dans une première extrémité (22a) dudit cylindre (21), ledit corps principal (13) ayant des moyens (15) pour s'opposer à l'extraction dudit piston (17) depuis ladite première extrémité (22a), lesdits moyens élastiques comportant un ressort hélicoïdal (25), lequel est contenu dans ledit cylindre (21) et est précompressé entre ledit piston (17) et une plaque d'extrémité (26) qui ferme la seconde extrémité (22b) dudit cylindre (21), et
l'appareil comportant en outre des moyens pour ajuster la précharge dudit ressort (25).

2. Appareil selon la revendication 1, **caractérisé en ce que** ladite tête (18), laquelle est montée en porte-à-faux par rapport à ladite première extrémité (22a), a une première partie plate (27) pour venir en butée contre une seconde partie plate correspondante (28) formée sur ledit élément de butée (20), ledit piston (17) et ledit élément de connexion (12), associés à ladite première partie plate (27) qui adhère à ladite seconde partie plate (28), ayant ladite première partie plate (27) et ladite seconde partie plate (28) agencées en grande partie de manière transversale par rapport au prolongement longitudinal dudit cylindre (21).
